# EUROPEAN PATENT APPLICATION

(11) **EP 4 538 951 A1**
(43) Date of publication of application: **16.04.2025**
(21) Application number: 23460034.4
(22) Date of filing: 13.10.2023
(51) Int. Cl.: G06Q 30/0201, G06Q 30/0251, G06F 16/38, H04L 67/30, H04L 67/50

(54) **A SYSTEM FOR COLLECTING, ANALYZING AND PROCESSING OF USER BEHAVIOR DATA FROM MULTIPLE SOURCES IN ORDER TO CREATE A PERSONALIZED USER DISTRIBUTION SCHEME WITH CONTEXTUAL SELECTION OF CONTENT ON THE WEBSITE**

(71) Applicant: Grupa Interia.pl spólka z ograniczona odpowiedzialnoscia spólka komandytowa, 31-539 Kraków (PL)
(72) Inventor: Litewka, Andrzej, 31-946 Kraków (PL)

(57) **Abstract**

pn. "A system for collecting, analyzing and processing of user behavior data from multiple sources in order to create a personalized user distribution scheme with contextual selection of content on the website."
1. Identifying and collecting information about the Internet user and his behavior in real time.
2. Processing of available data in different time intervals.
3. Providing information (real-time and historical) on the Internet user's traffic on the website.
4. Automatic contextual selection of materials on the website

The prepared platform is an IT system designed to build 'content' websites focused on interaction with Internet users. The platform contains a number of logical modules aimed at increasing the activation of the Internet user. Modules can connect to each other using webservices or other defined APIs required in a specific situation. This enables easy connection of platform modules with external applications. The individual components have been additionally divided into virtual zones, only within which communication and data flow are possible. As part of building the prototype, we try to embed new projects on the PaaS platform, but it is necessary to ensure full compatibility with previous solutions, which is why an application development strategy was adopted in the microservices model.

Flowchart of information Assistant (IA))

1. Each internet user is automatically marked and assigned a unique identifier.
2. On each page or in our application there are IWA scripts that send information to the collector:
1. Describing the client environment, i.e. the type of application, operating system, browser information, IP addresses, adblock information, etc.
2. Optional (if completed) personal information such as demographic data such as age, gender, place of residence, e-mail hash, IDFA / GAID advertising identifiers.
3. Internet user's traffic on our websites, i.e. where he was, when and where did he come from and where he went, and what types of materials he viewed.

3. All the above data goes to our Big Data system, after appropriate transformation to the appropriate formats.
4. For all our products (internet services), a common content categorization taxonomy has been developed, which is used at subsequent stages to determine the interest groups of Internet users.
5. Based on the collected data, applications work in which we have developed a number of algorithms that are aimed at:
1. Preparation and calculation of an Internet user profile.
2. Preparation of tables describing thematic interests for each Internet user identified by us.
3. Reconstruction of Internet user IDs and implementation of the so-called cross-device identification.

6. On the basis of the collected data, another group of applications with recommendation and predictive algorithms works, the purpose of which is:
1. Preparation of a stream of information that is selected and arranged in such a way that the Internet user increases his engagement by making more views on our websites.
2. In the information stream, we inject additional individual supplementary information depending on the data resulting from the Internet user profile.

## Description

### THE DEFINITION OF THE FIELD OF TECHNOLOGY

The subject of the description is a system for collecting, analyzing and processing of user behavior data from multiple sources in order to create a personalized user distribution scheme with contextual selection of content on the website, that is a set of automated activities aiming to assess and interpret user's behavior in order to suggest the most suited content in the Information Assistant (IA) model. The set of aforementioned activities allows for:
1. Identifying and collecting information about the Internet user and his behavior in real time.
2. Processing of available data in different time intervals.
3. Providing information (real-time and historical) on the Internet user's traffic on the website.
4. Automatic contextual selection of materials on the website

### Description

The system consists of three parts:
1. Trackers, which are a set of libraries, enabling the acquisition of the necessary data about the Internet user.
2. IWA (Interia Web Analitycs) - a system responsible for aggregation and processing of Internet users' clickstream.
   2.1. IWA: hCol (Collector) - a server operating in the hosting environment of the INTERIA.PL Group, ensures communication between trackers and the IWA: RDS system.
   2.2. IWA: RDS (Raw Data Stream) - a Big Data class technology platform enabling detailed exploration and debugging of internet users' traces on the websites of the INTERIA.PL Group.
3. Information Assistant, i.e. a group of applications that process Internet user behavior with embedded recommendation modules, the task of which is to prepare a stream of information sent to the user through various communication channels.

The prepared platform is an IT system designed to build 'content' websites focused on interaction with Internet users. The platform contains a number of logical modules aimed at increasing the activation of the Internet user. Modules can connect to each other using webservices or other defined APIs required in a specific situation. This enables easy connection of platform modules with external applications. The individual components have been additionally divided into virtual zones, only within which communication and data flow are possible. As part of building the prototype, we try to embed new projects on the PaaS platform, but it is necessary to ensure full compatibility with previous solutions, which is why an application development strategy was adopted in the microservices model.

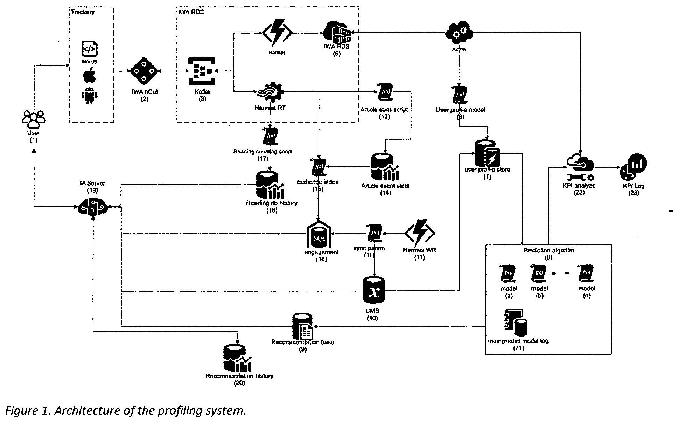

The high-level profiling system architecture developed within the scope of the invention will be described in the attached illustration (Figure 1. Architecture of the profiling system).

The components of the profiling system include:
Trackers are a set of libraries that are attached to each website in the form of libraries written in JavaScript or dedicated SDK libraries compiled into mobile applications on Android or iOS
IWA: hCol (2) - a cluster of server applications capable of receiving a very large amount of stream related to the Internet activity of the Internet user. For the needs of IA, the delivered stream is forked in such a way as to limit the size of the stream, which is then to be processed in the real-time model. Only the information needed for RealTime processing goes to this stream. Here the message is sent as soon as the event arrives. Each message (PageView, Outlink, Event, Stream, EndPageView) is sent separately, but contains some information from the underlying messages (Load, PageView).
Kafka (3) - message broker.

Hermes, Hermes WR, Hermes RT - technology developed within INTERIA.PL Group, which includes an application framework designed to process large amounts of metric data, synchronize the content of databases and sets stored in big data systems.

IWA: RDS (5) properly processed and compressed data stream with the activity of Internet users on profiled websites and applications stored on the big data system.

User profile model (6) - a set of applications working on the Big Data system controlled by Airflow, which, based on the IWA: RDS tables (5) and data downloaded from the CMS database (10), calculates the user's daily profile, for each user id and date it creates one a row in a table that lists what the user was doing on that day. It contains, among other things, information about the categories from which he viewed the articles, both in the version with weights (depending on the referer) and without, it contains such a list only for the main categories and for all categories, both for leaves and categories from higher levels. In the user's profile, it is necessary to include information about the appropriate flag informing whether we can build recommendations (personalized for him) for articles for the user or not, which is related to the requirement of proper handling of the GDPR Act. Such calculations are performed cyclically, but at least once a day, and the result of the calculations is saved in the user profile store database (7).

Prediction algorithm (8) - a set of applications working on a Big Data cluster controlled by Airflow, which, based on the profile (prepared by module 6), calculates for each user a list of categories that the user likes the most. Calculations are performed according to a number of available algorithms. The system is flexible to add additional calculation models as needed. The calculation results are inserted into the Recommendation Base (9). The module has the ability to make different versions of the algorithm for different user IDs, and also saves the current version of the algorithm in the database (9) next to the user. On the Big Data side, in the user predict model log (21) file, we save the history of what version of the algorithm was selected for a specific user at a given time (for statistical and comparative purposes). The module does not build recommended categories for the user, if the flag in the profile (7) that the user does not want personalized recommendations is selected, which results from respecting the GDPR.

Recommendation Base (9) - a relational database that contains information on which categories are recommended and for which user, according to individual algorithms. The database also contains information about the version of the algorithm selected for a specific user. It is very important that the database contains the current state, it does not contain history.

Article stats script (13) - the module responsible for transforming the IWA2RT stream - Workflow reads the data from Kafka from the IWA2RT topic, then puts it into the data into the Article event stats (14) database where Materialized View is created, which filter and aggregate the events that are needed for subsequent calculations at later stages.

Article event stats (14) ClickHouse technology - analytical database that contains the entire IWA RT stream. Materialized View information_assistant.ia_objects_agg is created on it, which aggregates (automatically after uploading data) viewing parameters for a given object on a given day. As part of the aggregation, we obtain the following data: object type, object id, number of views, average percentage of scrolling, average time of stay, min and max time of the event (page views).

Engagement (16) - Database of article position factors in a category and depth factors - The database stores the article position factor in a given category. The list of categories for the article and the publication time is obtained from the CMS database (10) as a result of data synchronization provided by the sync param (11) workflow working in the Hermes WR instance. The audience index is obtained from Article event stats (14) When inserting data from the Article event stats database, calculations are made using the audience index (15) module and articles are sorted for categories, and then for each article in the category (or actually for the first X), it calculates the coefficients the position of the article in the category multiplied by the depth factors. The database should also contain information whether the article is available for newsletters or not. A list of the most popular articles should be built in the database, regardless of the category, as a list of articles for the default profile. Data can be cached but only for a relatively short time (^{~} 10 min). On request, the database API with category id should return X of the most popular materials in this category.

Reading db history (18) - database containing the history of what the user has read (seen). The key in the database is the user_id-month_date pair. We take the current mail id (sha1) as the user id, if not, the last mail id (last sha1), and if not, global_uid. If global_uid could not be set, we put service_uid there. The constructed id is used in algorithms. In a separate column there may be information where the identifier comes from (sha1, last_sha1, global_uid, service_uid), in the case of grouping and occurrence of sha1 and last_sha1, we set sha1 as the type. The date is in the YYYY-MM format. For the created key, we assign a list of pairs: object_type-object_ID separated with commas (object types described above). The keys should expire 2 months after the end of the month to which they apply. The IA server (19) retrieving data from this database should retrieve values for two keys for the user: for the current and the previous month. And on both lists it checks if the user has seen the article.

IA Server (19) Recommendation server - it is an https server that allows for the transfer of calculated personalized lists in accordance with the algorithms set for the Internet user to the target service, where the recommendation feed will be embedded.

Recommendation history (20) - history of recommended articles - database with what the user has already recommended. The key in the database is the user_id-day_date pair. The method of creating a user id is described above for component 18, the date is in the YYYY-MM-DD format. For the key created in this way, we assign a list of triples: object_type-object_id-number separated by commas (object types described above). The keys should expire after 7 days. The server downloading data from this database should retrieve values for the last seven keys (days) for the user and on all lists it sums up the number of times the user has seen the article (sums up the number of recommendations from all keys for a given object) and uses the appropriate formula for the ratio. It records only the first 10 objects from the list (we assume that the user will definitely see them, not necessarily the others).

KPI Analyze (22) - calculating the effectiveness of algorithms - the script calculates, based on the PV for the user from IWA: RDS (5) and the history of the algorithms used, saved in the user predict model log (21) for a given day, what was the effectiveness of each version of the algorithms, the result is stored in the Big Data warehouse in the KPI Log (23) file. The calculated metrics can also use the data saved in the user profile store (7) database if we want to check the effectiveness in terms of a certain group of users.

### Flowchart of Information Assistant (IA))

1) Each internet user is automatically marked and assigned a unique identifier.
2) On each page or in our application there are IWA scripts that send information to the collector:
   a) Describing the client environment, i.e. the type of application, operating system, browser information, IP addresses, adblock information, etc.
   b) Optional (if completed) personal information such as demographic data such as age, gender, place of residence, e-mail hash, IDFA / GAID advertising identifiers.
   c) Internet user's traffic on our websites, i.e. where he was, when and where did he come from and where he went, and what types of materials he viewed.
3) All the above data goes to our Big Data system, after appropriate transformation to the appropriate formats.
4) For all our products (internet services), a common content categorization taxonomy has been developed, which is used at subsequent stages to determine the interest groups of Internet users.
5) Based on the collected data, applications work in which we have developed a number of algorithms that are aimed at:
   a) Preparation and calculation of an Internet user profile, which includes a number of metrics that describe the user, such as: gender, age, location, environment, where it comes from most often, how often, at what times, etc. Some of the collected data is provided directly by the user in various forms (e.g. registration for e-mail, smaker.pl or other forms). Part of the data (gender, age, location) in the absence of declarative data is predicted on the basis of the developed analytical models based on the behavior and probability of belonging to a group of similar users who provided information of interest to us.
   b) Based on the user's traffic and the developed common categorization of services, materials that the Internet user browses, subsequent applications work with algorithms and analytical models, the purpose of which is to prepare tables describing thematic interests for each Internet user identified by us.
   c) Another group of applications are applications whose purpose is to rebuild internet user identifiers and implement the so-called cross-device identification. This need results from the fact that the first stage of identification most often consists in generating a unique identifier for the internet user and saving it on the browser side and sending the tracking to our server. We save identifiers on the 1st and 3rd row cookies as well as in a number of other places such as local storage or indexDB.
6) On the basis of the collected data, another group of applications with recommendation and predictive algorithms works, the purpose of which is:
   a) Preparation of a stream of information that is selected and arranged in such a way that the Internet user increases his engagement by making more views on our websites. Depending on the interest in the subject, the provided feed with information changes the amount of content from individual thematic categories in order to best catch the interest of the Internet user.
   b) In the information stream, we inject additional individual supplementary information depending on the data resulting from the internet user's profile - at the moment, such information is a dedicated weather forecast written by our Automated Journalism services for the nearest town where the internet user is located, information about the horoscope (if the behavior shows that that he is interested in this type of message). Further types are planned: cinema repertoire or notification of the broadcast of a series or TV program, which may result from interest in series or, for example, broadcasting a football match.

### BENEFICIAL EFFECTS

The implementation of the abovementioned system has had the following beneficial effects:
1. Increased knowledge about the users browsing the webpages of the Interia.pl Group.
2. Recommending a personalized stream of information to the Internet user resulted in an increase in the time spent on the website.
3. A system for transferring data between systems was created.

### EXAMPLE OF THE IMPLEMENTATION

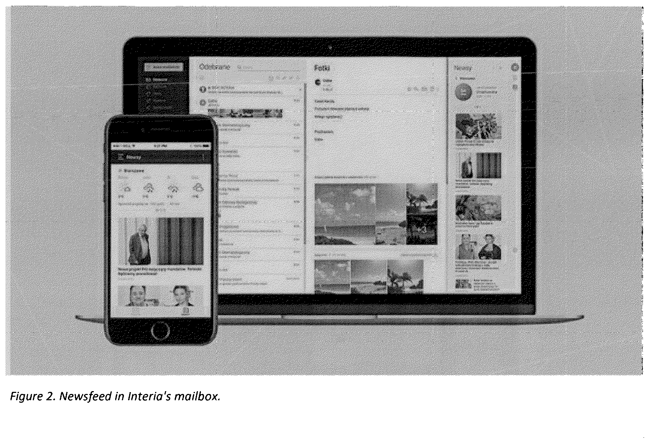

The project was implemented in the business activity of Grupa Interia.pl Sp. z o.o., Sp. K. One of the examples is the provision of a personalized newsfeed component for webmail in the Interia.pl Group e-mail service (as one of the available information channels), where, as part of the implementation, Interia made available to all users of the e-mail service the possibility of reading portal content directly in the e-mail interface prepared using the developed content profiling algorithm (Figure 2. attached to the description).

## Claims

1. set of procedures, ways of integrating technological components that constitute a complete IT system, together with methods of collecting, processing and sharing data in order to create a personalized user distribution/aggregation scheme with contextual selection of materials on websites consisting of:
• methods of identifying internet users together with the identification of the client environment and registering user activity on the monitored services.
• gathering, efficient storage and processing of the data
• processes for profiling and segmentation of users
• processes for the development of content recommendations that the user is interested in along with the technology for delivering the stream in the real-time.
